# FASCICULE DE BREVET EUROPEEN

(11) **EP 0 504 065 B1**
(45) Date de publication et mention de la délivrance du brevet: **06.12.1995**
(21) Numéro de dépôt: 92400670.3
(22) Date de dépôt: 13.03.1992
(51) Int. Cl.: C02F 3/06, C02F 3/10

(54) **Procédé et appareillage pour l'épuration d'eaux résiduaires par voie biologique**
Verfahren und Einrichtung für biologische Abwasserreinigung
Process and installation for biological waste water purification

(30) Priorité: 15.03.1991 FR 9103160
(43) Date de publication de la demande: 16.09.1992
(73) Titulaire: OTV Omnium de Traitements et de Valorisation, 94417 St Maurice Cédex (FR)
(72) Inventeur: Rogalla, Franck, F-75116 Paris (FR)
(74) Mandataire: Vidon, Patrice

(56) Documents cités:
- EP-A- 0 046 900
- DE-A- 3 742 219
- FR-A- 2 538 800

## Description

La présente invention a trait au domaine de l'épuration par voie biologique, des eaux résiduaires telles que notamment les eaux urbaines, les eaux industrielles ainsi que des eaux de distribution à rendre potables. Elle concerne tout spécialement un procédé de purification dans lequel l'eau à traiter et le gaz oxygéné sont envoyés à co-courants ascendants dans un seul réacteur ou filtre biologique muni, comme matériau de filtration, de matières plastiques ou minérales expansées de densité inférieure à celle de l'eau.

On sait que le traitement biologique, par exemple de l'eau, consiste à dégrader les impuretés organiques par l'action d'une biomasse épuratrice libre ou fixée, et renfermant des micro-organismes divers : bactéries, levures, protozoaires, métazoaires...Dans le procédé à biomasse libre, par boues activées, il y a impossibilité de concentrer en grand nombre les diverses espèces de micro-organismes, peu décantables dans la mesure où la concentration de la biomasse est réalisée par décantation; le procédé est donc limité pour ce qui est de la charge applicable en DBO (demande biologique en oxygène) et DCO (demande chimique en oxygène). Dans un système à biomasse fixée, la concentration de la biomasse (avec les bactéries) se fait par l'accrochage sur un support. L'aptitude à la décantation n'est plus alors le critère primordial et cette technique possède un potentiel épuratoire bien supérieur à celui des procédés conventionnels.

Parmi les procédés les plus performants, basés sur le principe d'épuration à biomasse fixée, on peut citer notamment ceux brevetés et développés par la Demanderesse dont le procédé dit "Biocarbone" (marque déposée) et la technique consistant à mettre en oeuvre, dans un seul réacteur à courant d'eau ascendant, un lit granulaire constitué par deux zones de granulométrie et caractéristiques biologiques différentes (brevets français n° 76 21246 publié n° 2 358 362; n° 78 30282 publié n° 2 439 749; n° 86 13675 publié n° 2 604 990).

Dans les techniques dites à biomasse libre, on se reportera ici en particulier aux procédés à lits fluidisés, dans lesquels on met en oeuvre, comme matériau pour le biofiltre, des produits de densité inférieure à 1 comme par exemple des polymères expansés, selon des processus qui sont maintenant dans le domaine public (brevet français n° 1 363 510 de 1963; brevet anglais n° 1 034 076 de 1962) dont diverses variantes d'exécution ont donné lieu à de nombreux brevets d'invention (brevets français n° 330 652, 2 406 664, 2 538 800; brevet américain n° 4 256 573; brevet japonais n° 58-153 590, etc).

La mise en oeuvre de ces matériaux flottants et de lits granulaires fluidisés est intéressante en soi mais entraîne un certain nombre de difficultés et présente souvent des inconvénients. Par exemple, si l'on fluidise des matériaux plus lourds que l'eau (sable ou analogue) il faut un apport d'énergie considérable pour le pompage du liquide et le maintien du matériau à l'intérieur du réacteur est difficile à maîtriser. Pour pallier cet inconvénient de consommation d'énergie, on a proposé d'utiliser un lit fluidisé à matériaux légers, moins denses que l'eau avec insufflation d'air à la base du lit mais avec une alimentation en eau descendante (brevets US n° 4 256 573 et japonais n° 58 153590 déjà cités). Toutefois, à partir d'une certaine vitesse descendante de l'eau, les bulles d'air sont piégées à l'intérieur du matériau ou alors entraînées par le flux liquide et l'on ne peut aérer correctement le réacteur.

Dans le but d'obvier aux inconvénients susvisés, de nombreuses expérimentations ont été faites chez la Demanderesse pour utiliser tous les avantages d'un lit flottant en cherchant à éliminer les phénomènes de piégeage de bulles à la surface, colmatage du lit, dépenses en énergie, difficultés de lavage du lit filtrant, etc.

Ces difficultés ont été vaincues grâce à la mise au point du procédé selon revendication 1.

Il était connu dans l'état de la technique d'utiliser des particules présentant une masse volumique inférieure ou supérieure à celle de l'eau, dans le cadre des filtres biologiques.

Le document FR-A-2538800 concerne ainsi un procédé pour le traitement d'effluents en vue de leur épuration mettant en oeuvre des filtres biologiques constitués par un matériau en vrac présentant une masse volumique inférieure à 1000 kg/m³.

Le document EP-A-0046900 propose quant à lui d'utiliser en tant que matériau servant de support à une biomasse, un matériau macroporeux présentant un poids spécifique compris entre 10 et 200kg/m3 correspondant à une masse volumique comprise entre environ 100 et 2000 kg/m³.

Enfin le document DE-A-3742219, propose d'utiliser un matériau présentant un poids spécifique de 60kg/m³ correpondant à une masse volumique de 600kg/m³.

L'invention propose donc de sélectionner, dans la très large gamme de densités de particules proposée dans l'état de la technique, un étroit intervalle de densités qui permet d'améliorer notablement l'épuration de l'eau.

De nombreuses expérimentations entreprises par la Demanderesse ont permis d'établir que, seule, la sélection rigoureuse de l'intervalle désiré de masse volumique précité permettait d'obtenir une épuration de grande efficacité et stable dans le temps. En effet, il a été constaté qu'en utilisant des billes de polystyrène de densité en vrac inférieure à 0,035, le matériau donnait lieu à des phénomènes d'écrasement et de tassement sur le plafond de rétention, ce qui entraîne d'importantes pertes de charge hydraulique et un colmatage sévère du lit.

D'autre part, la mise en oeuvre de billes de polystyrène de densité supérieure à 0,065, outre les difficultés techniques de réalisation, donne lieu à d'intempestifs entraînements du matériau lors des lavages du lit à contre-courant et donc à des pertes inacceptables.
D'autres caractéristiques, encore, du procédé seront mises en lumière dans la suite de la présente description.

L'invention a également pour objet un réacteur ou filtre biologique comme defini dans la revendication 2.

Une réalisation non limitative d'une installation de traitement d'eau est illustrée sur les dessins des planches annexées qui représentent :
- figure 1, une vue en perspective, en éclaté, d'un ensemble de traitement, à deux réacteurs ou biofiltres en parallèle;

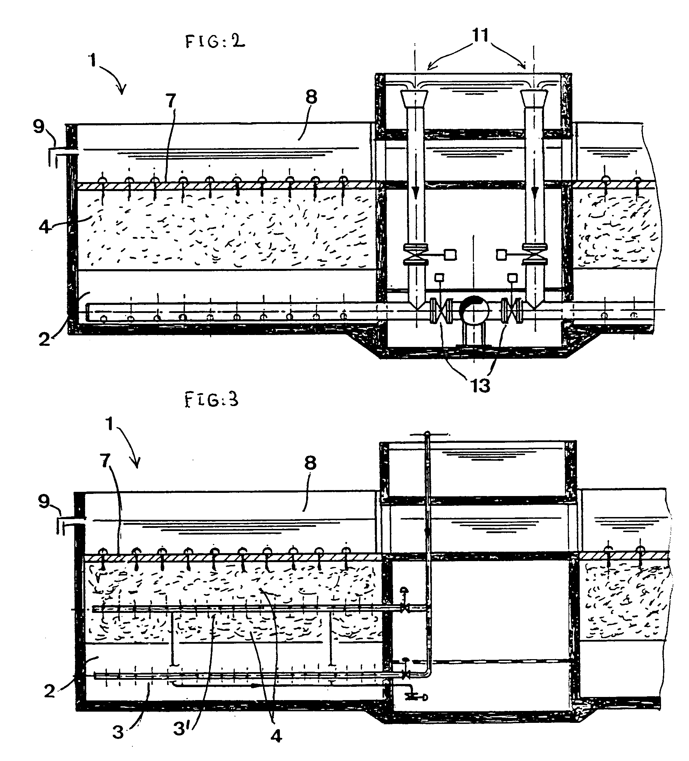

- figure 2, une vue partielle, en coupe, d'un réacteur selon la ligne AA de la figure 1; et
- figure 3, une vue du même réacteur selon la coupe BB de la figure 1.

Conformément à ces figures, un réacteur 1 comporte, dans sa partie inférieure, l'espace 2 pour l'épaississement et l'évacuation des boues; puis : le système d'injection de fluide oxygéné 3, le lit fixe 4 retenu par la plaque perforée 7 servant de plafond; et enfin un réservoir 8 d'eau traiteé servant au retrolavage dudit matériau filtrant au sommet duquel est prévue l'évacuation 9 de l'effluent traité

Le liquide à traiter arrive par la canalisation 11 et est introduit dans la zone 2, en-dessous du dispositif d'injection de gaz oxygéné 3, ce dernier pouvant se trouver sous le lit 4, comme indiqué sur la figure, ou encore au sein de ce lit (repère 3').

Lorsque de l'air (ou gaz oxygéné) est introduit à la base par 3, on obtient un échange intensif entre le gaz, l'eau à traiter et le biofilm qui s'accroche aux particules. Pendant cette opération, le lit 4 reste en régime non turbulent (d'où l'expression de lit fixe utilisée dans la présente description).

A cause de l'accumulation de matière en suspensions et de la croissance biologique à l'intérieur du lit filtrant, le matériau se colmate progressivement. L'accroissement de la perte de charge est suivi par la montée du niveau du liquide dans la colonne 11 de mise en charge ou de mesure de perte de charge. La rétention de particules peut être améliorée par l'ajout d'un floculant.

Quand une valeur prédéfinie de perte de charge est atteinte le lavage du lit est déclenché. Pour cela, une vanne de chasse 13 est ouverte jusqu'à obtention de la vitesse de lavage voulue. L'écoulement rapide à contre-courant du liquide traité et stocké en partie supérieure 8 du réacteur permet l'expansion du matériau. Pour la granulométrie et la densité du matériau telles que définies ci-dessus, on choisit une vitesse de lavage comprise entre 30 et 80 m/h.

Le passage rapide à contre-courant permet d'entraîner les matières stockées dans les espaces intersticiels et de décrocher la biomasse en excès accumulée sur la surface du matériau, mais l'intervalle précité de vitesse permet de conserver un biofilm actif sur le matériau. Après vidange de la réserve 8 et fermeture de la vanne 13, on peut redémarrer l'alimentation à une charge semblable à celle avant lavage.

Un recyclage de l'effluent épuré par une pompe permet éventuellement d'améliorer la répartition ou d'apporter des nitrates en zone de préfiltration.

Pour allonger les durées entre les lavages, de très courtes chasses d'eau par ouverture de la vanne 13 peuvent être effectuées périodiquement pour détasser le matériau et permettre une pénétration plus profonde des impuretés dans le lit filtrant. Ces mini-lavages décolmateront davantage la partie inférieure du filtre plus chargée en matières en suspension. Les chasses rapides peuvent être déclenchées de manière à assurer une perte de charge équilibrée sur toute la hauteur du lit de filtration. Ceci permet de s'affranchir d'organes de régulation pour l'équipartition du gaz oxygéné et de l'eau.

Afin d'éviter une trop forte compression du lit par une insufflation continue, on peut prévoir une pulsation de l'air ou gaz oxygéné. L'insufflation de l'air peut être maintenue pendant le lavage, pulsé ou non, pour favoriser le décolmatage du lit.

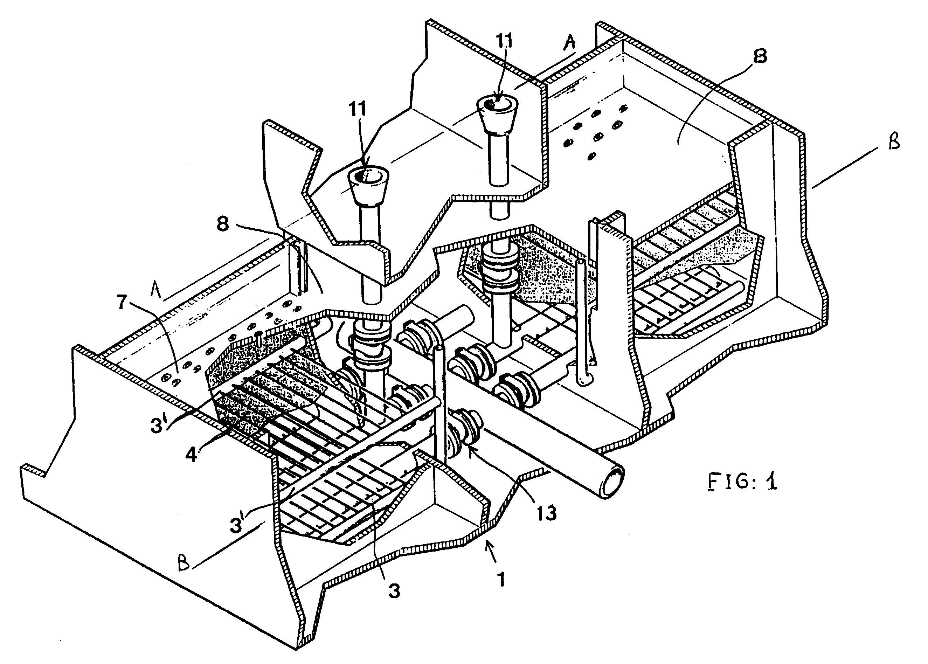

Selon une réalisation avantageuse du procédé, on combine une batterie de filtres comme illustré sur la figure 1. Un plan d'eau commun alimentera des colonnes de mise en charge individuelles à chaque filtre. Les colonnes de mise en charge évitent la surpression créée par un éventuel colmatage accidentel, tout en compensant le colmatage en continu. Avec cette alimentation gravitaire, le débit peut être facilement mesuré et réglé par des déversoirs.

Les compartiments de stockage d'eau de lavage d'une batterie de filtres seront reliés hydrauliquement. Ainsi, l'eau épurée des filtres en fonctionnement alimentera le flux de lavage du filtre en décolmatage, ce qui permet de donner une hauteur et un volume suffisants aux compartiments de stockage superposés au lit filtrant, les dimensions pouvant être calculées en fonction du débit et du nombre des filtres.

### Exemple de réalisation

On a travaillé sur une installation de traitement d'eau urbaine polluée contenant 5 cellules de filtration disposées en parallèle (chaque cellule correspondant à un réacteur 1 de type susdécrit) ayant chacune une surface de 16 m². La hauteur de chaque cellule ou réacteur était d'environ 5,70m et la hauteur de matériau cellulaire (dans ce cas des billes de polystyrène de 3,5 mm environ de diamètre et de densité 0,045) était d'environ 3 mètres.

Le débit d'eau traité était de 2300 m³/jour et les caractéristiques de pollutions étaient les suivantes : NTK : 40 mg; (azote total Kjehldahl); DCO (demande chimique en oxygène) : 400 mg; MES (matières en suspension) : 100 mg/l.

L'eau traitée, dans l'effluent de sortie, avait les très bonnes caractéristiques suivantes : DCO : 50 mg; MES : 10 mg/l, azote (N) total : 8 mg; dont 1 mg correspondant à N de NH₄, 5 mg à N de N0₃ et 2 mg à N organique.

## Revendications

1. Procédé pour la purification, par voie biologique, d'eaux résiduaires par envoi, à co-courants ascendants de l'eau à traiter et de gaz oxygéné dans un réacteur ou filtre biologique muni, comme support des bactéries, d'un lit fixe de particules moins denses que l'eau, caractérisé en ce que l'on sélectionne, en tant que support, des particules de polystyrène expansé de granulométrie comprise entre 2 et 6 mm et de masse volumique comprise entre 35 et 65 kg/m³,
en ce que ledit lit subit périodiquement un rétrolavage par passage de l'eau traitée à contre-courant dans ledit lit, à une vitesse comprise entre 30 et 80 m/h, de très courtes chasses d'eau étant effectuées entre les périodes de rétrolavage afin de détasser le matériau et, en ce qu'il comprend une étape consistant à recycler une partie de l'eau traitée.

2. Réacteur ou filtre biologique pour la mise en oeuvre du procédé selon la revendication 1 comportant de bas en haut : un receptacle (2) pour l'épaississement des boues et des moyens pour l'évacuation de celles-ci ; au moins un dispositif d'injection de gaz oxygéné (3) ; un matériau filtrant ; un plafond ou dispositif de retenue (7) ; caractérisé en ce qu'il comporte :
- des moyens pour l'introduction de l'eau à traiter à la base du réacteur (1) ;
- dans le haut du réacteur, un réservoir (8) d'eau traitée servant au rétrolavage dudit matériau filtrant au sommet duquel est prévue l'évacuation (9) de l'effluent traité,
- une vanne de chasse d'eau (13),
- des moyens pour le recyclage de l'eau traitée,
- au moins une colonne de mise en charge (11) permettant d'éviter la surpression créée par un éventuel colmatage accidentel du matériau filtrant tout en compensant le colmatage en continu et,
en ce que ledit matériau filtrant est constitué par des billes de polystyrène expansé de granulométrie comprise entre 2 et 6 mm et de masse volumique comprise entre 35 et 65 kg/m³.

3. Installation d'épuration d'eau, caractérisée en ce qu'elle comporte plusieurs réacteurs/filtres selon la revendication 2, disposés en parallèle à proximité d'un plan d'eau commun et dont les compartiments de lavage sont reliés hydrauliquement pour fournir l'eau de lavage pour les filtres en fonctionnement.

## Claims

1. Method for purifying waste water by biological means by sending, in ascending co-currents, water to be treated and oxygenated gas into a reactor or biological filter provided, as a medium for the bacteria, with a fixed bed of particles less dense than water, characterised in that, as a medium, particles of expanded polystyrene are selected which have a particle size of between 2 and 6 mm and a density of between 35 and 65 kg/m³,
in that the said bed periodically receives a back-washing by passing treated water in counter-current in the said bed, at a speed of between 30 and 80 m/h, very brief water flushing operations being carried out between the periods of back-washing so as to loosen the material, and
in that it comprises a step consisting of recycling part of the treated water.

2. Reactor or biological filter for implementing the method according to Claim 1, having, from bottom to top: a receptacle (2) for thickening the sludge and means for evacuating the latter; at least one device for injecting oxygenated gas (3); a filtering material; a roof or retention device (7); characterised in that it includes:
- means for introducing the water to be treated at the base of the reactor (1);
- at the top of the reactor, a reservoir (8) of treated water used for the back-washing of the said filtering material at the top of which the evacuation (9) of the treated effluent is provided for,
- a water flushing valve (13),
- means for recycling the treated water,
- at least one loading column (11) enabling overpressure created by any accidental clogging of the filtering material to be prevented, while compensating continuously for clogging, and
in that the said filtering material consists of expanded polystyrene balls with a particle size of between 2 and 6 mm and a density of between 35 and 65 kg/m³.

3. Water purification installation, characterised in that it includes several reactors/filters according to Claim 2, disposed in parallel near to a common sheet of water and whose washing compartments are connected hydraulically in order to supply the washing water for the filters during operation.

## Patentansprüche

1. Verfahren für die biologische Reinigung von Abwässern durch Einleiten des zu reinigenden Wassers und eines sauerstoffhaltigen Gases über gemeinsame steigende Strömungen in einen Reaktor oder in ein biologisches Filter, welches über ein festes Bett aus Teilchen verfügt, deren Dichte geringer als die des Wassers ist und die zum Halten von Bakterien dienen,
dadurch gekennzeichnet, daß man als Halterung Polystyrol-Teilchen verwendet, deren Korngröße zwischen 2 und 6 mm und deren Volumenmasse zwischen 35 und 65 kg/m³ liegt und dadurch,
daß das Bett periodisch in der Art rückgespült wird, daß das behandelte Wasser im Gegenstrom durch das Bett strömt, mit einer Geschwindigkeit von 30 bis 80 m/h, wobei sehr kurze heftige Wasserstöße zwischen den Rückspülungsperioden durchgeführt werden, um das Material aufzulockern und dadurch,
daß das Verfahren einen Schritt umfaßt, bei dem ein Teil des behandelten Wassers rezykliert wird.

2. Reaktor oder biologisches Filter zur Verwirklichung des Verfahrens gemäß Anspruch 1, welches von unten nach oben folgendes umfaßt: ein Gefäß (2) zum Eindicken der Schlämme sowie Mittel, um diese abzuleiten;
mindestens eine Einspeisevorrichtung für sauerstoffhaltiges Gas (3); einen filtrierenden Stoff; eine Decke oder Rückhaltevorrichtung (7), dadurch gekennzeichnet, daß es folgendes umfaßt:
- Mittel zum Einleiten des Wassers am unteren Teil des Reaktors (1),
- einen Vorratsbehälter (8) für behandeltes Wasser am oberen Teil des Reaktors, das für die Rückspülung des Filtermaterials genutzt wird, an dessen Scheitelpunkt der Ablauf (9) des behandelten Abwassers vorgesehen ist,
- ein Wasserspülungsventil (13),
- Mittel zum Rezyklieren des behandelten Wassers,
- mindestens eine Beladesäule (11), um die Unterdrückung, die durch eine eventuelle Verstopfung des Filtermaterials entstehen würde, zu vermeiden, wobei die Verstopfung kontinuierlich kompensiert wird und dadurch, daß das Filtermaterial aus Polystyrolkügelchen besteht, deren Korngröße zwischen 2 und 6 mm und deren Volumenmasse zwischen 35 und 65 kg/m³ liegt.

3. Einrichtung zum Reinigen von Wasser,
dadurch gekennzeichnet, daß sie mehrere Reaktoren/Filter gemäß Anspruch 2 umfaßt, die parallel in der Nähe eines gemeinsamen Gewässers liegen und deren Reinigungskammern hydraulisch miteinander verbunden sind, um das Spülwasser für die in Betrieb befindlichen Filter zu liefern.
